# EUROPEAN PATENT APPLICATION

(11) **EP 3 065 119 A1**
(43) Date of publication of application: **07.09.2016**
(21) Application number: 14859160.5
(22) Date of filing: 28.10.2014
(51) Int. Cl.: G09B 19/06, G06F 17/20, G10L 15/00

(54) **REAL-TIME ORAL ENGLISH EVALUATION SYSTEM AND METHOD ON MOBILE DEVICE**

(30) Priority: 30.10.2013 CN 201310524873
(71) Applicant: Shanghai Liulishuo Information Technology Co. Ltd., Shanghai 200092 (CN)
(72) Inventor: WANG, Yi, Hangzhou Zhejiang 310012 (CN); LIN, Hui, Shanghai 200092 (CN); HU, Zheren, Shanghai 200011 (CN)
(74) Representative: Fuchs Patentanwälte Partnerschaft mbB
(86) International application number: PCT/CN2014/089644
(87) International publication number: WO 2015/062465

(57) **Abstract**

The invention discloses a real-time spoken language assessment system and method on mobile equipment. The system comprises: an acquisition module configured to acquire speech data of a speech to be evaluated; a recognition module configured to recognize the speech data acquired by the acquisition module into text data; a matching module configured to match the text data recognized by the recognition module with text data of speech samples in a speech sample library to obtain a matching result; and an evaluation module configured to obtain and output a pronunciation score of at least one character or character string in the speech to be evaluated and/or the pronunciation score of the speech to be evaluated according to a predefined evaluation strategy and the matching result obtained by the matching module. With the spoken language assessment system being completed on the mobile equipment, the dependence of the spoken language assessment system on the network is reduced, real-time spoken language assessment feedback can be given to the user, and the user experience is improved.

## Description

### Field of the Invention

The present invention relates to the technical field of computers, and particularly to a real-time spoken language assessment system and method on mobile equipment.

### Background of the Invention

Current spoken language assessment systems mostly employ a computer as a client, a user records his speech via a microphone connected with the computer, audio data are transmitted to a server end via the Internet, and evaluated by an algorithm running at the server end. Evaluation algorithms all run on a computer at the server end, which has relatively sufficient computing resources (CPU resource, memory resource, and storage resource).

As mobile equipment prevails, users begin to migrate from computer clients to mobile equipment clients. Implanting the client of the evaluation system to the mobile equipment usually employs the following solution: a mobile equipment client collects speech data, the speech data are transmitted to the server via the Internet, a spoken language assessment algorithm running on the server evaluates the speech data, and an evaluation result is transmitted back to the mobile equipment client via the Internet.

Since the current solution depends on network connection, transmission of speech data via the network needs to consume traffic on the one hand, and on the other hand, it is almost impossible that the mobile equipment has a reliable network connection all the time. The above aspects are apt to cause the spoken language assessment system to present a negative user experience, and furthermore, building and maintaining the server of the spoken language assessment system also increases extra costs.

### Summary of the Invention

In view of the above problems, the present invention is proposed to provide a real-time spoken language assessment system and method on mobile devices, which addresses the above problems. With the spoken language assessment system being deployed on the mobile equipment, the dependence of a reliable network connection is reduced, i.e., traffic loss of message transmission between the mobile equipment and a client end can be decreased, and real-time spoken language assessment feedback can be presented to the user, thereby achieving an effect that the user can use the spoken language assessment system anytime and anywhere to practice spoken language, and improving the user experience effect.

According to an aspect of the present invention, there is provided a real-time spoken language assessment system on mobile equipment. The system comprises: an acquisition module configured to acquire speech data of a speech to be evaluated, the speech to be evaluated comprising at least one character or character string; a recognition module configured to recognize the speech data acquired by the acquisition module into text data; a matching module configured to match the text data recognized by the recognition module with text data of speech samples in a speech sample library to obtain a matching result; and an evaluation module configured to obtain and output a pronunciation score of at least one character or character string in the speech to be evaluated and/or a pronunciation score of the speech to be evaluated according to a predefined evaluation strategy and the matching result obtained by the matching module.

Optionally, the system further comprises: a display module configured to display the text data of speech samples in the speech sample library;
The acquisition module is further configured to acquire speech data which are input by the user according to the text data of speech samples in the speech sample library displayed by the display module and serve as the speech to be evaluated.

Optionally, the system further comprises: a score comparing module configured to compare the pronunciation score of the speech to be evaluated and/or the pronunciation score of at least one character or character string in the speech to be evaluated as output by the evaluation module, with a predefined pronunciation score threshold; a marking module configured to, in the case that the pronunciation score of the speech to be evaluated is lower than the predefined pronunciation score threshold, mark in the text data displayed by the display module text data whose pronunciation scores are lower than the predefined pronunciation score threshold; and/or in the case that the production score of at least one character or character string in the speech to be evaluated is lower than the predefined pronunciation score threshold, mark in the text data displayed by the display module characters or character strings whose pronunciation scores are lower than the predefined pronunciation score threshold.

Optionally, the matching module is further configured to, by using Levenshtein Distance edit-distance algorithm, match the text data recognized by the recognition module with text data of speech samples in a speech sample library to obtain a matching result.

Optionally, the predefined evaluation strategy is as follows: in the case that the recognized text data match the text data of speech samples in the speech sample library, a posterior probability of the character or character string in the recognized text data is considered as the pronunciation score of the character or character string in the speech to be evaluated, and an average score of pronunciation scores of all characters or character strings in the speech to be recognized is considered as the pronunciation score of the speech to be evaluated.

Optionally, the system further comprises: a storage module configured to store the speech sample library which comprises at least one speech sample.

According to another aspect of the present invention, there is provided a real-time spoken language assessment method on mobile equipment. The method comprises: acquiring speech data of a speech to be evaluated, the speech to be evaluated comprising at least one character or character string; recognizing the acquired speech data into text data; matching the recognized text data with text data of speech samples in a speech sample library to obtain a matching result; and obtaining and outputting a pronunciation score of at least one character or character string in the speech to be evaluated and/or a pronunciation score of the speech to be evaluated according to a predefined evaluation strategy and the matching result.

Optionally, before the step of acquiring speech data of a speech to be evaluated, the method further comprises: displaying the text data of speech samples in the speech sample library;

Correspondingly, the step of acquiring speech data of a speech to be evaluated is acquiring speech data which are input by the user according to the displayed text data of speech samples in the speech sample library and serve as the speech to be evaluated.

Optionally, the method further comprises: comparing the output pronunciation score of the speech to be evaluated and/or pronunciation score of at least one character or character string in the speech to be evaluated, with a predefined pronunciation score threshold; in the case that the pronunciation score of the speech to be evaluated is lower than the predefined pronunciation score threshold, marking in the displayed text data text data whose pronunciation scores are lower than the predefined pronunciation score threshold; and/or in the case that the production score of at least one character or character string in the speech to be evaluated is lower than the predefined pronunciation score threshold, marking in the displayed text data characters or character strings whose pronunciation scores are lower than the predefined pronunciation score threshold.

Optionally, the step of matching the recognized text data with text data of speech samples in a speech sample library to obtain a matching result is: by using a Levenshtein Distance edit-distance algorithm, performing matching calculation for the recognized text data and text data of speech samples in a speech sample library to obtain a matching result.

In the embodiment of the present invention, the real-time spoken language assessment system on mobile equipment is used to acquire speech data of a speech to be evaluated; then recognize the acquired speech data into text data; then match the recognized text data with text data of speech samples in a speech sample library to obtain a matching result; and then obtain and output a pronunciation score of the speech to be evaluated and/or a pronunciation score of at least one character or character string in the speech to be evaluated according to a predefined evaluation strategy and the matching result. With the spoken language assessment system being completed on the mobile equipment, the dependence of the mobile equipment on the network is reduced, traffic loss of message transmission between the mobile equipment and a client end can be decreased, and real-time spoken language assessment feedback can be presented to the user, thereby achieving an effect that the user can use the spoken language assessment system at any time and at any place to practice spoken language.

The above description only generalizes technical solutions of the present invention. The present invention may be implemented according to the content of the description in order to make technical means of the present invention more apparent. Specific embodiments of the present invention are exemplified to make the above and other objects, features and advantages of the present invention more apparent.

### Brief Description of Drawings

Other various advantages and benefits will be made apparent to those having ordinary skill in the art by reading through the following detailed description of preferred embodiments. Figures are only intended to illustrate preferred embodiments, and cannot be construed as limiting the present invention. In all figures, identical reference signs are used to denote identical components. In the figures,
Fig. 1 illustrates a block diagram of a real-time spoken language assessment system 100 on mobile equipment according to an embodiment of the present invention; and
Fig. 2 illustrates a flow chart of a real-time spoken language assessment method 200 on mobile equipment according to an embodiment of the present invention.

### Detailed Description of Preferred Embodiments

Exemplary embodiments of the present disclosure are described in more detail with reference to the figures. Although the figures display exemplary embodiments of the present disclosure, it should be appreciated the present disclosure may be implemented in various forms and should not be limited to the embodiments described here. On the contrary, these embodiments are provided to make the present disclosure more apparent, and convey the scope of the present disclosure completely to those skilled in the art.

It should be appreciated that those skilled in the art can envisage various structures which are not explicitly described or disclosed in the description, but implement the present invention, and are included in the spirit, principle and scope of the present invention.

All examples and conditional language cited in the description are intended for illustration and teaching purpose to assist readers in understanding principles and concepts by which the Inventor makes contribution over the prior art, and should be understood as not being limited to these specifically-cited examples and conditions.

Besides, all depictions and illustrations in the description citing principles, aspects, embodiments and their examples of the present invention are intended to cover their equivalents in structures and functions. In addition, such equivalents should include equivalents which are currently known and to be developed in the future, namely, research and development achievement that performs the same function regardless of the structure.

Those skilled in the art can appreciate that the block diagrams presented in the figures of the description represent illustrative views for implementing the structure or circuit of the present invention. Similarly, it should be appreciated that any flow charts presented in the figures of the description represent various processing that in fact may be executed by various computers or processors, no matter whether the figures explicitly display such computers or processors.

In the claims, a module for performing a designated function is intended to cover any manner for performing the function, including for example (a) a combination of circuit components executing this function, or (b) software in any form, and therefore including firmware, micro-codes or the like, which are combined with a suitable circuit to execute software performing the function. Since functions provided by various modules are combined together in a manner alleged by claims, it should be appreciated that any modules, parts or elements that may provide such functions are equivalent to the modules defined in claims.

The term "embodiment" in the description means that specific features, structures and the like described in conjunction with the embodiment are included in at least one embodiment of the present invention. Hence, the term "in the embodiment" at occurrences in the description does not necessarily refer to the same embodiment.

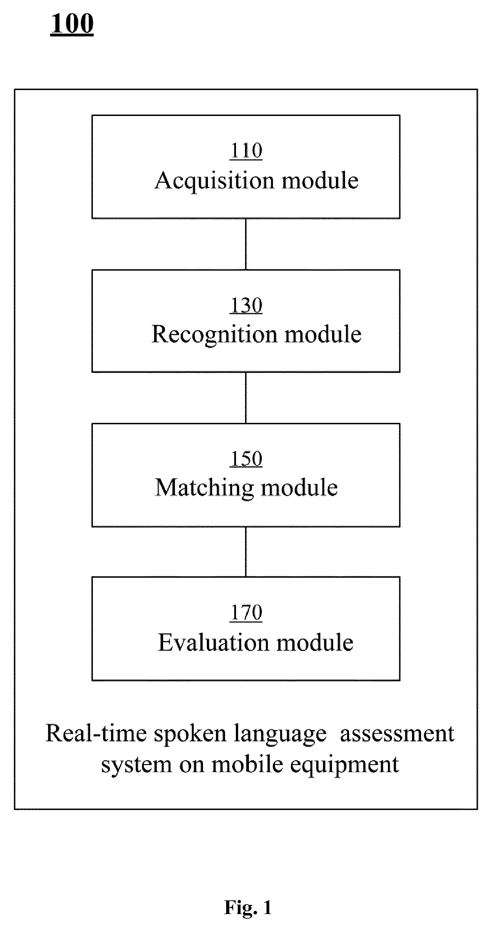

As shown in Fig. 1, a real-time spoken language assessment system 100 on mobile equipment according to an embodiment of the present invention may mainly comprise: an acquisition module 110, a recognition module 130, a matching module 150 and an evaluation module 170. It should be appreciated that connectional relations of modules shown in Fig. 1 are only for exemplary purpose, and those skilled in the art may surely employ other connectional relations so long as the modules under such connectional relations can implement functions of the present invention.

In the description herein, functions of modules may be implemented by using dedicated hardware, or hardware which can execute processing in combination with proper software. Such hardware or dedicated hardware may comprise an application-specific integrated circuit (ASIC), various other circuits and various processors. When a function is performed by a processor, the function may be provided by a single dedicated processor, a single shared processor, or a plurality of separate processors some of which might be shared. In addition, the processor should not be understood exclusively as hardware that can execute software, but may implicitly include, but not limited to digital signal processor (DSP) hardware, a Read Only Memory (ROM) for storing software, Radom Access Memory (RAM), and a non-volatile memory.

According to an embodiment of the present invention, the acquisition module 110 is configured to acquire speech data of a speech to be evaluated, wherein the speech to be evaluated comprises at least one character or character string. Optionally, the speech to be evaluated may comprise any one of Chinese words, English words and Arabic numerals or combinations thereof. Certainly, it may be appreciated that the language type of the speech to be evaluated is not limited in embodiments of the present invention.

In an embodiment of the present invention, the acquisition module 110 is responsible for recording the speech to be evaluated and storing speech data of the speech to be evaluated. Optionally, the acquisition module 110 may be a current microphone through which the user input the speech to be evaluated to the system 100. For example, the content in the speech to be evaluated may be the following English sentence: "Welcome to Liu Li shuo! My name is Peter. I'm an English teacher at Liu Li shuo." Optionally, the system 100, through the acquisition module 110, converts the speech data of the speech to be evaluated into an audio file in .wav format and stores it, wherein WAV format is a format of a sound waveform file. Certainly, it may be appreciated that embodiments of the present invention are not limited to the specific structure of the acquisition module 110.

According to the embodiment of the present invention, the recognition module 130 is configured to recognize the speech data acquired by the acquisition module 110 into text data.

In other words, the above exemplified speech data of the speech to be evaluated maybe recognized by the recognition module 130 into WELCOME TO LIU LI SHUO! MY NAME IS PETER. I'M AN ENGLISH TEACHER AT LIU LI SHUO.

Optionally, in the embodiment of the present invention, a speech recognition model employed by the recognition module 130 is Hidden Markov Model HMM with Gaussian Mixture Distribution as output probability distribution.

The recognition module 130 may employ fixed-point operation to recognize the speech data acquired by the acquisition module 110 into text data. For example, fixed-point arithmetic is performed in the following manners, but not limited to this:
Manner 1: there are a lot of floating-point arithmetic in a current speech recognition algorithm, the floating-point arithmetic may be implemented using fixed-point DSP (what is completed by fixed-point DSP is integer arithmetic or decimal arithmetic, a numerical value format does not include an order code, and usually the fixed-point DSP is of a 16-bit or 24-bit data width), and then conversion of a floating-point number into a fixed-point number is implemented through a number calibration method. Number calibration means deciding a position of a decimal point in the fixed-point number. Q representation method is a common calibration method and its representation mechanism is as follows: assume the fixed-point number be x, and the floating-point number be y, a conversion relationship of the fixed-point number and floating-point number in Q representation method is:
   Floating-point number y is converted into fixed-point number x: x= (int) y × 2^{Q}
Manner 2: (1) Define and simplify algorithm structure; (2) determine key variables in a function to be quantized; (3) collect statistics information of key variables; (4) determine precise representation of key variables; (5) determine a fixed-point format of remaining variables.

As known from the above, in the embodiment of the present invention, fixed-point arithmetic may be used to replace ordinary floating-point arithmetic, and reshaped number is used to replace ordinary floating-point number to represent an output probability of a recognition result. Since fixed-point arithmetic may be used in the embodiment of the present invention, and the fixed-point arithmetic needn't define many parameters as compared with the floating-point arithmetic, the recognition module 130 may complete recognition procedure by occupying less system resources (CPU resource, memory resource, and storage resource). Certainly, it may be appreciated that embodiments of the present invention do not limit a specific type of a recognition model used by the recognition module 130 for character recognition.

According to the embodiment of the present invention, the matching module 150 is configured to match the text data recognized by the recognition module 130 with text data of speech samples in a speech sample library to obtain a matching result.

Optionally, in the embodiment of the present invention, the text data of speech samples in a speech sample library may be text data stored in the speech sample library in advance, for example, the following text data may be stored in the speech sample library in advance: WELCOME TO LIU LI SHUO! MY NAME IS PETER. I'M AN ENGLISH TEACHER AT LIU LI SHUO.

Optionally, in the embodiment of the present invention, the matching module 150 is further configured to, by using Levenshtein Distance edit-distance algorithm, match the text data recognized by the recognition module 130 with text data of speech samples in a speech sample library to obtain a matching result. The matching result may comprise: the text data recognized by the recognition module 130 match text data of speech samples in the speech sample library, and the text data recognized by the recognition module 130 do not match text data of speech samples in the speech sample library. Certainly, it may be appreciated that the matching algorithm used by the matching module 150 is not limited in embodiments of the present invention.

According to the embodiment of the present invention, the evaluation module 170 is configured to obtain and output a pronunciation score of at least one character or character string in the speech to be evaluated and/or the pronunciation score of the speech to be evaluated according to a predefined evaluation strategy and the matching result obtained by the matching module 150.

Optionally, in the embodiment of the present invention, the predefined evaluation strategy is as follows: in the case that the recognized text data match the text data of speech samples in the speech sample library, a posterior probability of the character or character string in the recognized text data is considered as the pronunciation score of the character or character string in the speech to be evaluated, and an average score of pronunciation scores of all characters or character strings in the speech to be recognized is considered as the pronunciation score of the speech to be evaluated.

Optionally, in the embodiment of the present invention, if the posterior probability of the character or character string as recognized based on speech data is p (between 0 and 1), the pronunciation score of the character or character string is p X 100.

The above exemplified English sentence is taken as an example here. The evaluation module 170 may be used to obtain the pronunciation score of the whole English sentence "Welcome to Liu Li shuo! My name is Peter. I'm an English teacher at Liu Li shuo.", and/or obtain the production score of each word in the foregoing English sentence. That is, a unigram language model comprised of words of a sentence may be used in the embodiment of the present invention.

According to the embodiment of the present invention, the real-time spoken language assessment system 100 on the mobile equipment may further comprise one or more optional modules to perform extra or additional functions. However, these optional modules are not requisite for achieving the object of the present invention. The real-time spoken language assessment system 100 on the mobile equipment according to the embodiment of the present invention can completely achieve the object of the present invention without these optional modules. These optional modules are not shown in Fig. 1, but connectional relationship between them and the above-mentioned modules may be readily envisaged by those skilled in the art according to the following teaching.

Optionally, in the embodiment of the present invention, the system 100 further comprises: a display module configured to display the text data of speech samples in the speech sample library, e.g., display the following English sentence "Welcome to Liu Li shuo! My name is Peter. I'm an English teacher at Liu Li shuo";

Correspondingly, the acquisition module 110 is further configured to acquire speech data which are input by the user according to the text data of speech samples in the speech sample library displayed by the display module and serve as the speech to be evaluated.

This is to say, the acquisition module 110 acquires speech data resulting from the user's read of the following English sentence: "Welcome to Liu Li shuo! My name is Peter. I'm an English teacher at Liu Li shuo".

Optionally, in the embodiment of the present invention, the system 100 further comprises: a score comparing module and a marking module, wherein

The score comparing module is configured to compare the pronunciation score of the speech to be evaluated and/or the pronunciation score of at least one character or character string in the speech to be evaluated as output by the evaluation module 170, with a predefined pronunciation score threshold; optionally, the predefined pronunciation score threshold may be set as 60 scores. Certainly, it may be appreciated that the specific value of the predefined pronunciation score is not limited in the embodiments of the present invention.

The marking module is configured to, in the case that the pronunciation score of the speech to be evaluated is lower than the predefined pronunciation score threshold, mark in the text data displayed by the display module text data whose pronunciation scores are lower than the predefined pronunciation score threshold; and/or in the case that the production score of at least one character or character string in the speech to be evaluated is lower than the predefined pronunciation score threshold, mark in the text data displayed by the display module characters or character strings whose pronunciation scores are lower than the predefined pronunciation score threshold.

The above exemplified English sentence is taken as an example here. In the case that the score comparing module compares and finds that the pronunciation score of "Welcome" is lower than the predefined pronunciation score threshold, "Welcome" may be marked in the whole English sentence. Optionally, a color of "Welcome" is set as red.

Optionally, in the embodiment of the present invention, the system further comprises: a storage module configured to store a speech sample library, wherein the speech sample library comprises at least one speech sample, for example, the content of the speech sample is "Welcome to Liu Li shuo! My name is Peter. I'm an English teacher at Liu Li shuo."

According to embodiments of the present invention, with the spoken language assessment system being completed on the mobile equipment, the dependence of the mobile equipment on the network is reduced, traffic loss of message transmission between the mobile equipment and the client end is decreased, and real-time spoken language assessment feedback can be presented to the user, thereby achieving an effect that the user can use the spoken language assessment system at any time and at any place to practice spoken language.

According to a second aspect of the present invention, corresponding to the above-mentioned real-time spoken language assessment system 100 on mobile equipment according to an embodiment of the present invention, the present invention further provides a real-time spoken language assessment method 200 on mobile equipment.

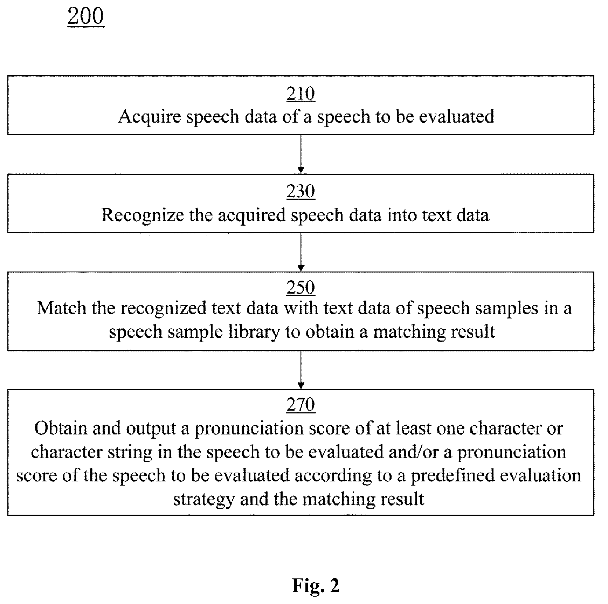

Referring to Fig. 2, it illustrates a flow chart of a real-time spoken language assessment method 200 on mobile equipment according to an embodiment of the present invention. As shown in Fig. 2, the method 200 comprises steps S210, S230, S250 and S270. The method 200 begins with step S210 of acquiring speed data of a speech to be evaluated, wherein the speech to be evaluated comprises at least one character or character string. Optionally, the speech to be evaluated may comprise any one of Chinese words, English words and Arabic numerals or combinations thereof. Certainly, it may be appreciated that the language type of the speech to be evaluated is not limited in embodiments of the present invention.

The user inputs the speech to be evaluated to the system 100 through a microphone. For example, the content in the speech to be evaluated may be the following English sentence: "Welcome to Liu Li shuo! My name is Peter. I'm an English teacher at Liu Li shuo." Optionally, the system 100, through the acquisition module 110, converts the speech data of the speech to be evaluated into an audio file in .wav format and stores it, wherein WAV format is a format of a sound waveform file.

Then, in step S230, the acquired speech data are recognized as text data. That is to say, the above exemplified speech data of the speech to be evaluated may be recognized as WELCOME TO LIU LI SHUO! MY NAME IS PETER. I'M AN ENGLISH TEACHER AT LIU LI SHUO.

Optionally, in the embodiment of the present invention, a speech recognition model employed as employed is Hidden Markov Model, HMM, with Gaussian Mixture Distribution as output probability distribution. That is, in the embodiment of the present invention, fixed-point arithmetic may be used to replace ordinary floating-point arithmetic, and reshaped number is used to replace ordinary floating-point number to represent an output probability of a recognition result. Certainly, it may be appreciated that embodiments of the present invention do not limit a specific type of a recognition model used for character recognition.

Then, in step S250, the recognized text data are matched with text data of speech samples in a speech sample library to obtain a matching result.

Optionally, in the embodiment of the present invention, the text data of speech samples in a speech sample library may be text data stored in the speech sample library in advance, for example, the following text data may be stored in the speech sample library in advance: WELCOME TO LIU LI SHUO! MY NAME IS PETER. I'M AN ENGLISH TEACHER AT LIU LI SHUO.

Optionally, in the embodiment of the present invention, in step S250, the recognized text data are matched with text data of speech samples in a speech sample library by using Levenshtein Distance edit-distance algorithm, to obtain a matching result. For example, the matching result may comprise: the recognized text data match text data of speech samples in the speech sample library, and the recognized text data do not match text data of speech samples in the speech sample library. Certainly, it may be appreciated that the utilized matching algorithm is not limited in embodiments of the present invention.

Then, in step S270, a pronunciation score of at least one character or character string in the speech to be evaluated and/or the pronunciation score of the speech to be evaluated are/is obtained and input according to a predefined evaluation strategy and the matching result.

Optionally, in the embodiment of the present invention, the predefined evaluation strategy is as follows: in the case that the recognized text data match the text data of speech samples in the speech sample library, a posterior probability of the character or character string in the recognized text data is considered as the pronunciation score of the character or character string in the speech to be evaluated, and an average score of pronunciation scores of all characters or character strings in the speech to be recognized is considered as the pronunciation score of the speech to be evaluated.

Optionally, in the embodiment of the present invention, if the posterior probability of the character or character string as recognized based on speech data is p (between 0 and 1), the pronunciation score of the character or character string is p X 100.

The above exemplified English sentence is taken as an example here. The pronunciation score of the whole English sentence "Welcome to Liu Li shuo! My name is Peter. I'm an English teacher at Liu Li shuo.", and/or the production score of each word in the foregoing English sentence may be obtained through step S270. That is, a unigram language model comprised of words of a sentence may be used in the embodiment of the present invention.

According to the embodiment of the present invention, the real-time spoken language assessment method 200 on the mobile equipment may further comprise one or more optional steps to perform extra or additional functions. However, these optional steps are not requisite for achieving the object of the present invention. The real-time spoken language assessment method 200 on the mobile equipment according to the embodiment of the present invention can completely achieve the object of the present invention without these optional steps. These optional steps are not shown in Fig. 2, but sequential execution between them and the above-mentioned steps may be readily envisaged by those skilled in the art according to the following teaching. It is appreciated that unless otherwise specified, the execution order of these optional steps and the above-mentioned steps may be selected according to practical needs.

Optionally, the method 200 further comprises: displaying the text data of speech samples in the speech sample library, e.g., display the following English sentence "Welcome to Liu Li shuo! My name is Peter. I'm an English teacher at Liu Li shuo.";

Correspondingly, the step (S210) of acquiring speech data of the speech to be evaluated is: acquiring speech data which are input by the user according to the displayed speech samples in the speech sample library and serve as the speech to be evaluated.

This is to say, the speech data resulting from the user's read of the following English sentence may be acquired through step S210: "Welcome to Liu Li shuo! My name is Peter. I'm an English teacher at Liu Li shuo."

Optionally, the method 200 further comprises: comparing the output pronunciation score of the speech to be evaluated and/or pronunciation score of at least one character or character string in the speech to be evaluated with a predefined pronunciation score threshold; optionally, the predefined pronunciation score threshold may be set as 60 scores. Certainly, it may be appreciated that the specific value of the predefined pronunciation score is not limited in the embodiments of the present invention.

In the case that the pronunciation score of the speech to be evaluated is lower than the predefined pronunciation score threshold, text data whose pronunciation scores are lower than the predefined pronunciation score threshold are marked in the displayed text data; and/or in the case that the production score of at least one character or character string in the speech to be evaluated is lower than the predefined pronunciation score threshold, characters or character strings whose pronunciation scores are lower than the predefined pronunciation score threshold are marked in the displayed text data.

The above exemplified English sentence is taken as an example here. In the case that it is found after comparison that the pronunciation score of "Welcome" is lower than the predefined pronunciation score threshold, "Welcome" may be marked in the whole English sentence. Optionally, a color of "Welcome" is set as red.

Since the above method embodiments correspond to the aforesaid apparatus embodiments, they will not be described in detail here.

The description as provided here describes a lot of specific details. However, it is appreciated that embodiments of the present invention may be implemented in the absence of these specific details. Some embodiments do not specify known methods, structures and technologies to make the principles of the description apparent.

Those skilled in the art may appreciate that modules in the apparatus in the embodiment may be changed adaptively and they are set in one or more apparatuses different from the present embodiment. Modules in the embodiment may be combined into one module or unit or assembly, and besides, they may be divided into a plurality of sub-modules, sub-units or sub-assemblies. Except that at least some of such features and/or processes are mutually repellent, all steps of any method and all modules of any apparatus disclosed in the description may be combined by employing any combinations. Unless otherwise stated expressly, each feature disclosed in the specification may be replaced with an alternative feature providing identical, equivalent or similar objective.

Apparatus embodiments of the present invention may be implemented with hardware, or with software module running on one or more processors, or with a combination thereof. Those skilled in the art should understand that a microprocessor or digital signal processor (DSP) may be used in practice to implement some or all functions of some or all modules in the apparatus according to embodiments of the present invention. The present invention may also be implemented as a device program (e.g., computer program and computer program product) for executing the method described here.

It should be noted that the above embodiment illustrate the present invention but are not intended to limit the present invention, and those skilled in the art may design alternative embodiments without departing from the scope of the appended claims. In the claim set, the order of features does not mean any specific order of features, and particularly, the order of steps in method claims does not mean that these steps must be executed in this order. On the contrary, these steps may be executed in any proper order. Likewise, the order for executing processing by modules in the apparatus claims should not be limited by the sorting of modules in the claims, and the modules may execute processing in any proper order. In claims, any reference signs placed in parentheses should not be construed as limiting the claims. The word "comprising" or "including" does not exclude the presence of modules or steps not listed in a claim. The word "a" or "an" preceding a module or step does not exclude the presence of a plurality of such modules or steps. The present invention may be implemented by virtue of hardware including several different modules and by virtue of a properly-programmed computer or processor. In the apparatus claims enumerating several modules, several of these modules can be embodied by one and the same hardware. The usage of the words "first", "second" and "third", et cetera, does not indicate any ordering. These words are to be interpreted as names. The terms "connect" and "couple", when used in the description, are defined as operable connection in any desired form, e.g., connection such as mechanical connection, electronic connection, digital connection, analog connection, direct connection, indirect connection, or connection via software or hardware.

## Claims

1. A real-time spoken language assessment system (100) on mobile devices, comprising:
an acquisition module (110) configured to acquire speech data of a speech to be evaluated, the speech to be evaluated comprising at least one character or character string;
a recognition module (130) configured to recognize the speech data acquired by the acquisition module (110) into text data;
a matching module (150) configured to match the text data recognized by the recognition module (130) with text data of speech samples in a speech sample library to obtain a matching result; and
an evaluation module (170) configured to obtain and output a pronunciation score of at least one character or character string in the speech to be evaluated and/or a pronunciation score of the speech to be evaluated according to a predefined evaluation strategy and the matching result obtained by the matching module (150).

2. The system according to claim 1, wherein the system further comprises: a display module configured to display the text data of speech samples in the speech sample library;
the acquisition module (110) is further configured to acquire speech data which are input by the user according to the text data of speech samples in the speech sample library displayed by the display module and serve as the speech to be evaluated.

3. The system according to claim 2, wherein the system further comprises:
a score comparing module configured to compare the pronunciation score of the speech to be evaluated and/or the pronunciation score of at least one character or character string in the speech to be evaluated as output by the evaluation module (170), with a predefined pronunciation score threshold;
a marking module configured to, in the case that the pronunciation score of the speech to be evaluated is lower than the predefined pronunciation score threshold, mark in the text data displayed by the display module text data whose pronunciation scores are lower than the predefined pronunciation score threshold; and/or
in the case that the pronunciation score of at least one character or character string in the speech to be evaluated is lower than the predefined pronunciation score threshold, mark in the text data displayed by the display module characters or character strings whose pronunciation scores are lower than the predefined pronunciation score threshold.

4. The system according to claim 1, wherein the matching module (150) is further configured to, by using Levenshtein Distance edit-distance algorithm, match the text data recognized by the recognition module (130) with text data of speech samples in a speech sample library to obtain a matching result.

5. The system according to any one of claims 1-4, wherein the predefined evaluation strategy is as follows: in the case that the recognized text data match the text data of speech samples in the speech sample library, a posterior probability of the character or character string in the recognized text data is considered as the pronunciation score of the character or character string in the speech to be evaluated; and an average score of pronunciation scores of all characters or character strings in the speech to be recognized is considered as the pronunciation score of the speech to be evaluated.

6. The system according to any one of claims 1-4, wherein the system further comprises:
a storage module configured to store the speech sample library which comprises at least one speech sample.

7. A real-time spoken language assessment method (200) on mobile equipment, comprising:
acquiring speech data of a speech to be evaluated, the speech to be evaluated comprising at least one character or character string (S210);
recognizing the acquired speech data into text data (S230);
matching the recognized text data with text data of speech samples in a speech sample library to obtain a matching result (S250); and
obtaining and outputting a pronunciation score of at least one character or character string in the speech to be evaluated and/or a pronunciation score of the speech to be evaluated according to a predefined evaluation strategy and the matching result (S270).

8. The method according to claim 7, wherein before the step of acquiring speech data of a speech to be evaluated (S210), the method further comprises: displaying the text data of speech samples in the speech sample library;
the step of acquiring speech data of a speech to be evaluated (S210) is:
acquiring speech data which are input by the user according to the displayed text data of speech samples in the speech sample library and serve as the speech to be evaluated.

9. The method according to claim 8, wherein the method further comprises:
comparing the output pronunciation score of the speech to be evaluated and/or pronunciation score of at least one character or character string in the speech to be evaluated, with a predefined pronunciation score threshold;
in the case that the pronunciation score of the speech to be evaluated is lower than the predefined pronunciation score threshold, marking in the displayed text data text data whose pronunciation scores are lower than the predefined pronunciation score threshold; and/or in the case that the production score of at least one character or character string in the speech to be evaluated is lower than the predefined pronunciation score threshold, marking in the displayed text data characters or character strings whose pronunciation scores are lower than the predefined pronunciation score threshold.

10. The method according to any one of claims 7-9, wherein the step of matching the recognized text data with text data of speech samples in a speech sample library to obtain a matching result is:
by using a Levenshtein Distance edit-distance algorithm, performing matching calculation for the recognized text data and text data of speech samples in a speech sample library to obtain a matching result.
